# DEMANDE DE BREVET EUROPEEN

(11) **EP 4 718 777 A1**
(43) Date de publication de la demande: **01.04.2026**
(21) Numéro de dépôt: 25201532.6
(22) Date de dépôt: 11.09.2025
(51) Int. Cl.: H04L 9/40, H04L 67/12, H04W 4/12, H04W 4/48, H04W 12/12

(54) **PROCÉDÉ DE SÉCURISATION DE MESSAGES, DISPOSITIF ET VÉHICULE ASSOCIÉS**

(30) Priorité: 27.09.2024 FR 2410404
(71) Demandeur: AMPERE s.a.s., 92100 Boulougne-Billancourt (FR)
(72) Inventeur: GAUTERON, Laurent, 78080 GUYANCOURT (FR); LEHEUP, Jocelyn, 78080 GUYANCOURT (FR); ZANETTI-DUBUS, Fleur, 78080 GUYANCOURT (FR)
(74) Mandataire: Renault Group

(57) **Abrégé**

Procédé de sécurisation de premiers messages, mis en œuvre dans un véhicule automobile (100), comprenant les étapes suivantes :
- Première détermination d'une première fréquence de réception de premiers messages en provenance d'un module électronique (120) du véhicule automobile (100), par une communication authentifiée,
- Deuxième détermination si la première fréquence de réception est suffisamment faible pour qu'une première condition soit vérifiée, par comparaison de la première fréquence de réception avec une première fréquence de référence,
- Mise en œuvre d'une contre mesure, la mise en œuvre de la contre-mesure étant conditionnée à ce que la première fréquence de réception soit suffisamment faible pour que la première condition soit vérifiée.

## Description

### Domaine technique

La présente invention concerne les véhicules automobiles, et notamment la sécurité et la lutte contre les fraudes dans les véhicules automobiles.

### Technique antérieure

On connait une fraude visant à dissimuler l'usure d'un véhicule automobile résultant de son kilométrage en plaçant un dispositif de fraude entre l'odomètre du véhicule automobile et un processeur central commandant l'affichage du kilométrage du véhicule automobile. Le dispositif de fraude bloque la transmission de messages au processeur et mémorise alors ces messages, comprenant le kilométrage que l'odomètre a mesuré, lorsque le véhicule automobile est en possession d'un fraudeur.

Lorsque le véhicule automobile est ensuite vendu à un acheteur, le dispositif de fraude envoie, à ce processeur, les messages bloqués et mémorisés précédemment, pour donner l'apparence d'un affichage normal du kilométrage et afficher des valeurs de kilométrage inférieures au kilométrage réel du véhicule automobile. L'usure du véhicule automobile parait alors moins élevée qu'elle ne l'est en réalité, ce qui peut permettre une revente frauduleuse du véhicule automobile au-dessus de sa valeur réelle.

Cette méthode de fraude ne s'applique pas seulement au kilométrage des véhicules automobiles et à l'odomètre. Elle peut également être mise en œuvre pour d'autres données et grandeurs et pour d'autres dispositifs électroniques.

Il existe des mécanismes d'anti-rejeux basés sur des clefs cryptographiques dynamiques qui sont robustes à ce type de dispositif de fraude retenant les messages et les jouant au moment opportun, mais l'implémentation et le déploiement de tels mécanismes est complexe à cause du renouvellement dynamique des clefs cryptographiques à mettre en place.

D'autres mécanismes d'anti-rejeux plus simples connus de l'homme de métier, en particulier ceux basés sur des clefs cryptographiques statiques et un compteur monotone, ne sont en revanche pas robustes à ce type de dispositif de fraude.

### Exposé de l'invention

L'invention vise à remédier à cet inconvénient et a pour objet, selon l'un de ses aspects, un procédé de sécurisation de premiers messages, mis en œuvre dans un véhicule automobile, comprenant les étapes suivantes :
- Première détermination d'une première fréquence de réception des premiers messages en provenance d'un module électronique du véhicule automobile, par une communication authentifiée,
- Deuxième détermination si la première fréquence de réception est suffisamment faible pour qu'une première condition soit vérifiée, par comparaison de la première fréquence de réception avec une première fréquence de référence,
- Mise en œuvre d'une contre-mesure, la mise en œuvre de la contre-mesure étant conditionnée à ce que (la première détermination indique ou détermine que) la première fréquence de réception soit suffisamment faible pour que la première condition soit vérifiée (autrement dit : la contremesure étant mise en œuvre si la première fréquence de réception est suffisamment faible pour que la première condition soit vérifiée).

Ainsi, l'invention permet de faire apparaître la fraude décrite plus haut, en détectant que la première fréquence de réception est anormalement faible, et en mettant en œuvre la contre mesure en conséquence.

Par exemple, la première condition est vérifiée si un rapport égal à la première fréquence de réception divisée par la première fréquence de référence est inférieur à un seuil.

En variante, par exemple, la première condition est vérifiée si la première fréquence de réception est inférieure à la première fréquence de référence.

La première fréquence de réception est mesurée durant une durée quelconque qui peut être prédéterminée (autrement dit : qui peut être mémorisée en mémoire).

De manière classique, lorsqu'il s'agit de déterminer une fréquence, l'étape de première détermination comprend un dénombrement des premiers messages pendant la durée.

Selon un mode de réalisation, par communication authentifiée, on entend que le procédé comprend une étape de vérification de l'authenticité et de l'intégrité des premiers messages à partir d'une clef cryptographique (en mémoire), et par exemple, par la mise en œuvre d'un algorithme de vérification d'une signature (par exemple de type dit « RSA », EL GAMAL, ou DSA) ou d'un algorithme de vérification d'un code d'authentification de message (en anglais connu sous le nom de « MAC ») compris dans les premiers messages.

Dans le cas où cette étape de vérification de l'authenticité et de l'intégrité des premiers messages indique qu'un premier message parmi les premiers messages n'est pas authentique ou intègre, le procédé peut comprendre une étape de mise en œuvre d'une contre mesure (par exemple, une mise en œuvre de la contre mesure).

Selon un mode de réalisation, la première détermination comprend une vérification d'anti-rejeu des premiers messages (par exemple basé sur un compteur monotone) sans nécessairement de rétention préalable des premiers messages par le dispositif de fraude lorsque celui-ci reçoit ces premiers messages en provenance du module électronique.

Par exemple, la vérification de l'ordre de réception des premiers messages comprend la vérification qu'un compteur compris dans les premiers messages est égal à un compteur en mémoire (incrémenté sur réception de chaque nouveau message des premiers messages).

Dans le cas où cette étape de vérification indique un rejeu des premiers messages (par exemple, dans un système anti-rejeu basé sur un compteur monotone, une anomalie dans l'ordre de réception des premiers messages) le procédé peut comprendre une étape de mise en œuvre d'une contre mesure (par exemple, de la contre mesure).

En variante, l'homme de métier connait d'autres méthodes de vérification de l'ordre de réception. Par exemple, la vérification de l'ordre de réception peut être mise en œuvre par un horodatage des premiers messages, ou, dans le cas où les premiers messages comprennent le kilométrage du véhicule automobile, en utilisant le fait que le kilométrage ne diminue jamais au cours du temps.

Selon un mode de réalisation, les premiers messages comprennent des données représentatives d'une usure du véhicule automobile (obtenues ou mesurées par le module électronique).

L'invention permet ainsi de protéger des données qui sont importantes parce qu'elles déterminent la valeur du véhicule automobile.

En variante, les premiers messages comprennent des données à protéger contre des attaques par rétention suivant les différentes réglementations. On peut citer toutes les données circulant sur les bus de communication du véhicule et impliquées dans l'état de l'usure de la batterie ou du taux de pollution.

Selon un mode de réalisation, les premiers messages comprennent un kilométrage du véhicule automobile (depuis sa fabrication) et le module électronique est un odomètre.

Le kilométrage est en effet une donnée importante pour la valeur du véhicule.

En variante, les premiers messages comprennent l'état d'énergie certifiée d'une batterie d'un moteur électrique de propulsion du véhicule automobile, lorsque le véhicule automobile est un véhicule à propulsion électrique.

Selon un mode de réalisation, l'étape de deuxième détermination comprend une obtention de la première fréquence de référence à partir d'un mode d'activation (autrement dit : d'un état d'activation) dans lequel se trouve le véhicule automobile.

Par exemple, de manière non limitative, le mode d'activation (ou l'état d'activation) dans lequel se trouve le véhicule automobile est un mode (ou un état) parmi les modes (ou états) suivants (et/ou peut être successivement l'un des modes ou états suivants) :
- Un mode parking (où le véhicule automobile a son moteur arrêté, où le frein de parking du véhicule automobile est activé, et où le contact du véhicule automobile n'est pas mis),
- Un mode sous contact (où le contact du véhicule automobile est mis, mais le moteur de propulsion du véhicule automobile n'est pas en fonctionnement),
- Un mode traction (où un moteur de propulsion du véhicule automobile est en fonctionnement et propulse le véhicule automobile),
- Un mode vie à bord,
- et/ou un mode de mise à jour logicielle (du véhicule automobile).

Par exemple, la première fréquence de référence est plus élevée lorsque le véhicule automobile est en mode traction que lorsque le véhicule automobile est dans les autres modes ci-dessus.

La première fréquence de référence peut être mémorisée en mémoire, par exemple en association avec un identifiant du mode d'activation, par exemple dans une table associant un identifiant du mode d'activation à la première fréquence de référence (et dans ce cas, l'obtention de la première fréquence de référence peut comprendre une étape de lecture de la mémoire et /ou de la table).

En variante, la première fréquence de référence ne varie pas en fonction du mode d'activation du véhicule automobile.

Selon un mode de réalisation, le procédé de sécurisation comprend un envoi de chaque message des premiers messages à un composant électronique du véhicule automobile (par exemple à un écran ou à microprocesseur quelconque).

Selon un mode de réalisation, le procédé comprend (une étape d'envoi d') une commande d'affichage d'une partie au moins de chaque message des premiers messages (par exemple du kilométrage) à un écran du véhicule automobile (par exemple, situé dans un habitacle du véhicule automobile).

En variante, les premiers messages sont exploités d'une autre manière.

Selon un mode de réalisation, la mise en œuvre de la contre mesure comprend :
- Une (étape d'envoi d'une) commande de blocage d'une fonctionnalité du véhicule automobile (par exemple, la contre mesure peut empêcher le véhicule automobile de circuler),
- Une (étape d'envoi d'une) commande d'affichage d'un message d'alerte,
- Une mémorisation dans un calculateur du véhicule que la condition d'activation de la contremesure a été atteinte, et/ou
- Une commande d'envoi d'un message d'alerte à un serveur distant (par exemple, par l'intermédiaire d'un réseau de téléphonie mobile).

Par exemple, la contre mesure, par exemple dans le cas de la commande de blocage ou de la commande d'affichage, peut être persistante, c'est-à-dire qu'elle peut demeurer active un certain temps, par exemple prédéterminé ou par exemple jusqu'à une étape de réception d'une commande de désactivation authentifiée (par exemple de manière cryptographique et/ou par mot de passe).

Selon un mode de réalisation, le procédé comprend en outre, les étapes suivantes :
- Troisième détermination d'une deuxième fréquence de réception de deuxièmes messages en provenance du module électronique du véhicule automobile,
- Quatrième détermination si la deuxième fréquence de réception est suffisamment élevée pour qu'une deuxième condition soit vérifiée, par comparaison de la deuxième fréquence de réception avec une deuxième fréquence de référence, la mise en œuvre de la contre-mesure étant conditionnée, en outre, à ce que la deuxième fréquence de réception soit suffisamment élevée pour que la deuxième condition soit vérifiée.

De la même manière que pour la première fréquence de référence, l'étape de quatrième détermination peut comprendre une obtention de la deuxième fréquence de référence à partir d'un mode d'activation du véhicule automobile, comme ci-dessus

Les deuxièmes messages peuvent comprendre l'une parmi les informations suivantes :
- Les informations nécessaires à l'affichage de la vitesse du véhicule,
- Les ordres du système de freinage vers le contrôle moteur contribuant à la contrôlabilité du véhicule, et/ou
- Les informations de mauvais fonctionnement de l'ABS en cas de panne et ne permettant pas d'alerter le conducteur et surtout de mettre en sureté de fonctionnement le véhicule.

Les seconds messages peuvent être sélectionnés tels que ces seconds messages aient un impact opérationnel dissuadant l'attaquant de les retenir dans le but de ne pas activer la deuxième condition.

L'invention concerne aussi un programme d'ordinateur comprenant des instructions exécutables par un microprocesseur ou un microcontrôleur ou un ordinateur, pour mettre en œuvre les étapes du procédé selon l'invention, lorsqu'il est exécuté par le microprocesseur ou le microcontrôleur ou l'ordinateur.

L'invention concerne également un dispositif électronique (ou un véhicule automobile) configuré pour mettre en œuvre les étapes du procédé selon l'invention, ainsi qu'un véhicule automobile comprenant le dispositif électronique.

Bien qu'ils ne soient pas repris ici, les avantages et les caractéristiques du dispositif et du véhicule sont identiques (mutatis mutandis) à ceux du procédé ci-dessus.

### Brève description des dessins

L'invention pourra être mieux comprise à la lecture de la description détaillée qui va suivre, d'exemples non limitatifs de mise en œuvre de celle-ci, et à l'examen des dessins annexés, sur lequel :
[Fig.1] représente un dispositif électronique et un véhicule automobile, selon un mode de réalisation de l'invention.
[Fig.2] représente un procédé, selon un mode de réalisation de l'invention, mis en œuvre par le dispositif électronique de la [Fig.1].

### Description détaillée

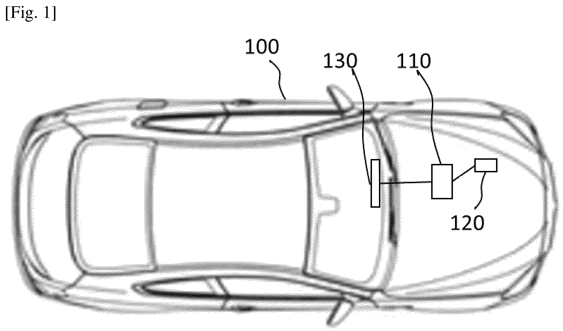

La [Fig.1] représente un véhicule 100 qui est un véhicule automobile.

Le véhicule 100 comprend un odomètre 120, un microprocesseur 110 et un écran d'affichage 130 qui est un écran d'affichage éventuellement tactile. L'odomètre 120 et l'écran d'affichage 130 sont connectés au microprocesseur 110 par un bus de données.

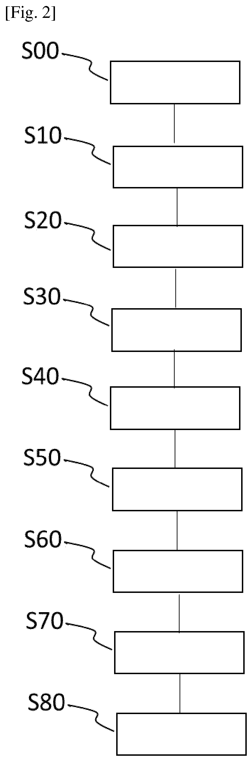

En référence à la [Fig.2], à l'étape S00, alors que le véhicule 100 circule, et se trouve donc dans un mode traction, le microprocesseur 110 reçoit des premiers messages et des deuxièmes messages, de la part de l'odomètre 120.

A l'étape S10, alors que la réception des premiers messages et des deuxièmes messages est toujours en cours, le microprocesseur 110 calcule la fréquence de réception des premiers messages, notée f1_{recep}.

A l'étape S20, alors que la réception des premiers messages et des deuxièmes messages est toujours en cours, le microprocesseur 110 calcule la fréquence de réception des deuxièmes messages, notée f2_{recep}.

A l'étape S30, le microprocesseur 110 lit dans sa mémoire deux fréquences de référence, noté f1_{ref} et f2_{ref} associées au mode traction.

A l'étape S40, le microprocesseur 110 vérifie si la première condition suivante est respectée :
f1_{recep /}f1_{ref ≤}seuil1, où seuil1 est une valeur numérique prédéterminée.

A l'étape S50, le microprocesseur 110 vérifie si la deuxième condition suivante est respectée : f2_{recep /}f2_{ref}≥ seuil2, où seuil2 est une valeur numérique prédéterminée.

Supposons que la première condition et que la deuxième condition soient respectées, alors, à l'étape S60, le microprocesseur 110 commande l'affichage à l'écran 130 d'un message d'alerte indiquant une anomalie ou une fraude.

Dans le cas contraire (i.e. : si la première condition ou la deuxième condition n'est pas vérifiée/ respectée), à l'étape S60, aucune commande d'un message d'alerte n'est envoyée à l'écran 130.

Par exemple, les premiers messages comprennent le kilométrage du véhicule 100, depuis sa fabrication, mesuré par l'odomètre 120.

Par exemple, de manière connue par l'homme de métier, pour assurer leur authenticité et leur intégrité, les premiers messages comprennent un code d'authentification de message (en anglais connu sous le nom de « MAC ») vérifié par le microprocesseur 110, par exemple à l'étape S40 ci-dessus, à partir d'une clef cryptographique symétrique qu'il mémorise dans sa mémoire non volatile. Si cette étape de vérification indique qu'un premier message parmi les premiers messages n'est pas authentique ou intègre, le microprocesseur 110 met en œuvre l'étape S60.

Par exemple, de manière connue par l'homme de métier, les premiers messages comprennent également un compteur de messages, et à l'étape S40, le microprocesseur 110 vérifie, en outre, que ce compteur de messages est égal à un compteur en mémoire du microprocesseur 110 incrémenté à réception de chaque message parmi les premiers messages par le microprocesseur 110. Ainsi, en cas de détection d'une anomalie dans l'ordre de réception des premiers messages, le procédé met en œuvre l'étape S60.

A l'étape S70, le microprocesseur 110 commande l'affichage du kilométrage compris dans les premiers messages, que le message d'alerte soit affiché ou pas.

L'affichage du message d'alerte est persistant. A l'étape S80, l'affichage du message d'alerte peut être interrompu sur saisie d'une code pin de sécurité sur l'écran 130 par le propriétaire du véhicule ou un personnel de maintenance.

Selon une variante de l'étape S60, le microprocesseur 110 peut commander :
- Un blocage de la circulation du véhicule automobile (par exemple, le démarrage du moteur de propulsion du véhicule 100 est inhibé), et/ou
- Un envoi d'un message d'alerte à un serveur distant (par exemple, par l'intermédiaire d'un réseau de téléphonie mobile).

Les deuxièmes messages de références peuvent être :
- Les informations nécessaires à l'affichage de la vitesse du véhicule,
- Les ordres du système de freinage vers le contrôle moteur contribuant à la contrôlabilité du véhicule, et/ou
- Les informations de mauvais fonctionnement de l'ABS en cas de panne et ne permettant pas d'alerter le conducteur et surtout de mettre en sureté de fonctionnement le véhicule.

Les étapes S00 à S80 peuvent être mise en œuvre par un programme d'ordinateur, en mémoire du microprocesseur 110, exécuté par microprocesseur 110.

## Revendications

1. Procédé de sécurisation de premiers messages, mis en œuvre dans un véhicule automobile (100), comprenant les étapes suivantes :
- Première détermination (S10) d'une première fréquence de réception des premiers messages en provenance d'un module électronique (120) du véhicule automobile (100), par une communication authentifiée,
- Deuxième détermination (S40) si la première fréquence de réception est suffisamment faible pour qu'une première condition soit vérifiée, par comparaison de la première fréquence de réception avec une première fréquence de référence,
- Mise en œuvre d'une contre mesure (S60), la mise en œuvre de la contre-mesure étant conditionnée à ce que la première fréquence de réception soit suffisamment faible pour que la première condition soit vérifiée.

2. Procédé de sécurisation selon la revendication précédente dans lequel la première détermination (S10) comprend une vérification d'anti-rejeu des premiers messages.

3. Procédé de sécurisation selon l'une quelconque des revendications précédentes dans lequel les premiers messages comprennent des données représentatives d'une usure du véhicule automobile (100).

4. Procédé de sécurisation selon l'une quelconque des revendications précédentes dans lequel les premiers messages comprennent un kilométrage du véhicule automobile (100) et le module électronique (120) est un odomètre.

5. Procédé de sécurisation selon l'une quelconque des revendications précédentes dans lequel l'étape de deuxième détermination comprend une obtention (S30) de la première fréquence de référence à partir d'un mode d'activation dans lequel se trouve le véhicule automobile (100).

6. Procédé de sécurisation selon l'une quelconque des revendications précédentes comprenant un envoi de chaque message des premiers messages à un composant électronique (130) du véhicule automobile (100).

7. Procédé de sécurisation selon l'une quelconque des revendications précédentes dans laquelle la mise en œuvre de la contre mesure (S60) comprend :
- Une commande de blocage d'une fonctionnalité du véhicule automobile (100), et/ou
- Une commande d'affichage d'un message d'alerte, et/ou
- Une mémorisation dans un calculateur du véhicule que la condition d'activation de la contremesure a été atteinte, et/ ou
- Une commande d'envoi d'un message d'alerte à un serveur distant.

8. Procédé de sécurisation selon l'une quelconque des revendications précédentes comprenant en outre, les étapes suivantes :
- Troisième détermination (S20) d'une deuxième fréquence de réception de deuxièmes messages en provenance du module électronique (120) du véhicule automobile (100),
- Quatrième détermination (S50) si la deuxième fréquence de réception est suffisamment élevée pour qu'une deuxième condition soit vérifiée, par comparaison de la deuxième fréquence de réception avec une deuxième fréquence de référence, la mise en œuvre de la contre-mesure (S60) étant conditionnée, en outre, à ce que la deuxième fréquence de réception soit suffisamment élevée pour que la deuxième condition soit vérifiée.

9. Dispositif électronique (110) configuré pour mettre en œuvre les étapes du procédé selon l'une quelconque des revendications 1 à 8.

10. Véhicule automobile (100) comprenant le dispositif électronique (110) selon la revendication précédente.
